# EUROPEAN PATENT APPLICATION

(11) **EP 3 366 723 A1**
(43) Date of publication of application: **29.08.2018**
(21) Application number: 16852913.9
(22) Date of filing: 05.10.2016
(51) Int. Cl.: C08L 33/20, C08L 97/00, C08K 5/053, C08L 27/06, C08L 27/08, C08K 3/24

(54) **COMPOSITION OF POLYACRYLONITRILE/LIGNIN BLEND AND USE THEREOF IN MELT SPINNING CARBON FIBRE PRECURSORS**

(30) Priority: 05.10.2015 BR 102015254296
(71) Applicant: Laboratórios Químicos E Metrológicos Quimlab Ltda, CEP:. 12305-490 Jardim Califórnia Jacarei-SP (BR)
(72) Inventor: ALVES, Nilton Pereira, CEP: 12244-493 - Urbanova São José dos Campos-SP (BR)
(74) Representative: Carvajal y Urquijo, Isabel
(86) International application number: PCT/BR2016/000106
(87) International publication number: WO 2017/059507

(57) **Abstract**

The present application describes a method of producing fibers by melting process in spinning extruders by using a composition containing polyacrylonitrile (PAN), lignin and plasticizers with high boiling point and dipolar moment, such as glycerine and glycerol carbonate. The use of thermal stabilizers also derived from halogenated glycerol, known as halodridines, and additives derived from the esterification of glycerin with fatty and phosphoric acids are also described. By removing the plasticizers and the soluble additives in polar solvents, such as water and alcohols, shortly after the spinning step, it is possible to produce fibers from PAN/lignin blend with characteristics similar to those produced by traditional wet spinning process, widely used in the production of carbon fiber. It should be emphasized that the lignin used may be that obtained by the Kraft Process. The glycerin used as a plasticizer can be derived from the production of biodiesel, which does not need to be purified by distillation process.

## Description

### Field of the invention

The present application for patent of invention aims to describe the composition of polyacrylonitrile (PAN) and lignin blends suitable for melting spinning and also their use in the production of carbon fiber, employing glycerine and its derivatives as plasticizers.

### State of the art

Currently, 90% of the carbon fiber produced in the world is obtained by employing polyacrylonitrile precursor. It is known that about 50 to 60% of the manufacturing costs of the PAN carbon fiber is due to the precursor. For this reason, research is carried out by various institutions around the world, such as the Oak Ridge National Laboratory (USA), in order to find alternative precursor cost reductions so that carbon fibers can be applied mainly in the automotive market, which does not require high tenacity fibers such as those used in the aeronautical and aerospace sectors. For motor vehicles, a 10% reduction in mass translates into savings of 6 to 7% of fuel. Among the most current researched options for reducing the cost of the carbon fiber precursor is the use of melting spinning methods of PAN, that do not use solvents and the use of alternative and cheaper carbon sources, such as lignin.

Lignin is a three-dimensional aromatic polymer found in the plant kingdom formed by the polymerization of three monomers in varying degrees, derived from p-coumaryl alcohol (p-hydroxyphenyl), coniferyl alcohol (guaiacil) and synapyl alcohol (syringyl), known as lignols. Lignols are incorporated into the polymer chain in the form of phenylpropanoids as shown in Formula 1 below, abbreviated as H, G and S, which are respectively the p-hydroxyphenyl, guaiacyl and syringyl groups. The gynosperm plants have lignin that consists almost of G groups with small amounts of H groups, whereas the dicotyledonous angiosperms present G and S groups with very little H. The monocotyledonous plants present lignin containing mixture of the three groups.

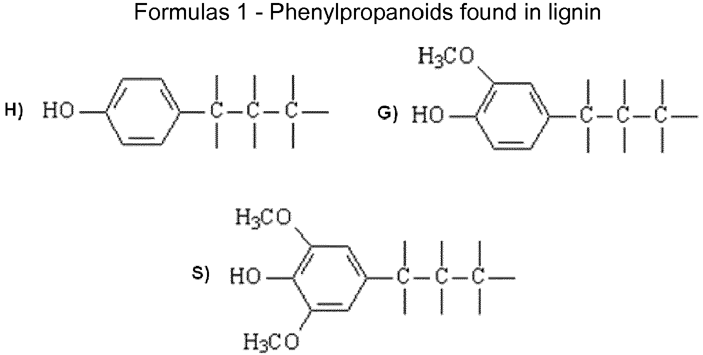

Lignin accounts for 20 to 35% of the raw wood, and after its separation from the cellulose it is burned by the paper industry in the form of "black liquor" for energy use. Existing processes for their separation of cellulose and hemicellulose into the industry involve aggressive hydrolytic chemical treatments that generally lead to fragmentation of the polymer chain, such as the "Kraft Process", which leads to low molecular weight molecules. The literature describes the obtaining of lignin by several processes with molecular weight values of less than 1 kDa to above 1000 kDa. Most of the molecular mass values of isolated lignins obtained by the Kraft Process are of the order of 1 kDa to 12 kDa and considering the guaiacil phenylpropanoic monomer with molecular weight of 166, the degree of polymerization of these lignins vary from 6 to 72.

By itself, this lignin, due to the high ash content and low molecular weight, is not suitable for wet spinning process because it produces low viscosity collodions. For the same reason, fragile and brittle fibers are produced by melting spinning processes. Another major problem in the production of carbon fiber with lignin precursor is its difficulty of thermal stabilization before the carbonization stage. Some processes describe the chemical modification of lignin by acetylation or phenolization so that the fibers can become stable and non-meltable in a typical temperature range of 200 °C to 300 °C, which increases the process, making the use of low-cost raw material without advantage. With regard to the carbon fibers that are produced from lignin, which although having a high carbon content of around 63%, their mechanical properties are quite inferior to those produced with PAN, and can hardly be used in structural applications in the aeronautical and aerospace industries.

There are many challenges and, therefore, there are few published patents regarding the use of lignin as a precursor of carbon fiber, some of which are US 5344921 of 1994 by Sudo et al. which describes the spinning of a compound obtained by reacting lignin with phenol at a temperature of 180 °C for 3 to 5 hours. Patent US 7678358 B2 and 7794824 B2 to Ecker et al. of 2010 which describe the obtaining of fibers from the acetylated lignin, produced by the reaction between lignin (softwood) with acetic anhydride and pyridine as catalyst. These fibers were stabilized at 240 °C for two hours in the air and carbonized at 1150 °C for two hours. It should be emphasized that the entire process was not carried out continuously, producing only monofilament of carbon fiber of diameter in the order of 50 to 100 µm. With respect to the use of lignin in blends with PAN copolymers for carbon fiber production, Patent US 8771832 B2 of 2014 by Bissett et al. describes wet spinning of a collodium containing 10 to 45% of a mixture of PAN/lignin dissolved in dimethylacetamide (DMAc). The carbon fiber produced had diameter of the order of 20 µm, tenacity of 82 Ksi and modulus of 7.8 Msi. Although this patent leads to the production of continuous cables from the PAN/lignin blend fibers, the whole process was carried out by wet spinning which has the negative impact related to the use of toxic solvents, such as recycling, which demands high energy consumption, losses due to chemical degradation in the distillation phase and large volume of liquid effluents that need to be treated before disposal in rivers and lagoons.

### Deficient points of the state of the art

### 1) Wet spinning processes

For economic and environmental reasons, in traditional wet spinning processes of PAN or PAN/lignin blends, it is necessary to recover and recycle all solvents used, which are highly polluting of water and soil. For example, in spinning using DMF and DMAc, about 2 to 3 tons of solvents are used for each ton of fiber produced. Recovery of the solvents is done with high energy consumption in distillation and vacuum concentration units, but the water resulting from these processes contains small concentrations of solvents and needs to be further treated in chemical or biological treatment plants to be discharged in rivers or reused. In the case of recovery of DMF and DMAc a loss of up to 5% per cycle of distillation occurs due to the formation of respective acids (formic and acetic acid) and methylamine, which cannot be further reconverted in the original solvents. These losses can only be offset by buying more new solvents. In addition, wet and dry spinning processes result in occupational safety hazards to operators due to the inhalation of solvent vapors which have high toxicity. DMAc, together with DMF, are the most commonly used solvents in the wet spinning of PAN. DMAc is considered hepatotoxic by cumulative effect, can affect fertility in humans and fetal development (suspected teratogen agent). For workers in the industry, ACGIH and OSHA (USA) recommend a 10 ppm exposure limit (TLV-TWA) for this substance. Environmental and occupational hazard factors are one of the biggest obstacles hindering the implementation of wet spinning plants in developed countries, with most of them now being located in Asia, in countries such as China, Turkey and India, where legislation is less rigorous.

### 2) Melting spinning processes

The most produced lignin in the world, Kraft Lignin, can be easily melted when heated between 150 °C and 250 °C, but it does not have rheological properties of spinning, mainly because it has low molecular weight, high ash content of 1 to 2%, high volatile content, from sulfur compounds. For these reasons it is practically impossible to employ it in a spinning extruder without an appropriate fractionation treatment for separation of larger molecular weight fractions, removal of alkali metal salts (desalination) and sulfur compounds (desulphurisation). These undesirable characteristics in lignin are due to the process of delignification of the wood by the use of hydrolytic agents, such as sodium hydroxide and sodium sulfide, which leads to the fragmentation of the three-dimensional chain in low molecular weight molecules, besides producing chemical modifications with the introduction of sulphonated groups. Lignin extracted from wood using solvents, known as "Organosolv Lignin", would theoretically be more suitable for the production of carbon precursor fiber, because it is chemically purer and of higher molecular weight, but its production is small and has a higher price than Kraft Lignin.

As discussed above, only a portion of the Kraft Lignin can be used in the melting spinning process, but even then the fibers produced cannot be converted into carbon fiber if they are not thermally stable due to the difficulty the lignin fragments have to form crosslinks between the molecules. It is observed that Kraft Lignin form eucalyptus obtained by the Lignoboost process, which melts at a temperature of 150 to 200 °C, can be kept melted for one or more hours in the air, before a significant increase in its viscosity is observed, thus indicating that the oxidation leading to crosslinking is very slow. In order to overcome this situation, some inventors have proposed the chemical modification of lignin by using other substances, or even by mixing lignin fractions obtained from different types of wood (softwood and hardwood), which increases the process as a whole and with this disappearing part of the financial advantage in the employment of a cheap raw material.

It was mainly thought of the production of low cost carbon fiber that led to the realization of the present invention, considering: simplification aspects that the melting spinning process entails when compared to wet spinning; use of cheap and low toxicity raw materials; use of raw materials from renewable resources that have a low environmental impact; that the obtained fibers can be stabilized/oxidized in a similar way to the precursor fibers produced in conventional processes.

### Summary of the invention

The aforementioned technical problems have been solved in the present invention by allowing the production of carbon precursor fiber starting from the PAN/lignin blend, melting spinned in conventional equipment employing as plasticizers, raw materials derived from the biodiesel production chain, such as glycerin or glycerol. The transesterification of vegetable oils leads to the production of 10% glycerin, which is currently a raw material of potential industrial use due to its low cost, high production and no toxicity, being part of all the triglycerides that exist in living beings. The fibers obtained by the present invention exhibit characteristics similar to those produced by wet spinning processes and, therefore, can be processed in conventional furnaces for carbon fiber.

As described in the literature PAN is considered a non-thermoplastic polymer, since the cyclization temperature of the polymer chain is less than its melting one. It can be seen in Formula 2 that the cyclization starts when the PAN is heated above 180 °C, producing new bonds with nitrilic nitrogen of the same or adjacent chain (crosslinks), resulting in a dark, brittle and unmeltable product. Cyclization is also accompanied by a large energy release and if it is not controlled by the removal of heat, the temperature of the polymer rises even higher and can reach above 300 °C, when mass loss occurs due to the release of gases such as ammonia, water, hydrocyanic acid and carbon oxides.

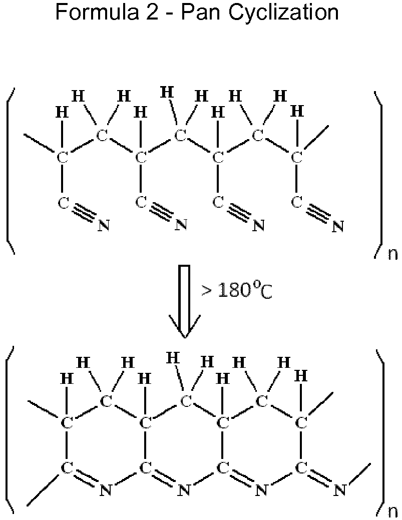

In 1968 Opferkuch *et al.* of the company Monsanto, described in Patent US 3388202 entitled "Method for melting acrylonitrile polymers and copolymers", a method of melting the PAN in a piston heated cylinder employing high polar non-solvent liquids such as formamide and ethyl cyanoacetate, being one of the first which addressed the issue of PAN's fusibility. It is also described in the book "Acrylic Fiber Technology and Applications" edited by James C. Masson in 1995 that this polymer when mixed with substances of high dipole moment such as water can be melted under high pressure at temperatures below 200 °C in the form of a hydrate and thermoplastically formed in fibers. Under these conditions, the intramolecular interaction of neighboring CN group dipoles is weakened and the polymer melts, without chain cyclization occurring. By using plasticisers with high dipole moment and high boiling point, mainly consisting of glycerin and glyceryl carbonate (GC), using halogenated thermal stabilizers such as glycerin-derived halohydrins, such as 1-chloro-2,3-propanediol, 3-dichloro 2-propanol, 1-bromo-2,3-propanediol, phosphoglyceric acids such as 2-phosphoglyceric acid and 3-phosphoglyceric acid and the chlorinated polymers polyvinyl chloride (PVC) and polyvinylidene chloride (PVDC), the inventor found the effect of PAN melting is similar to that observed by the using high pressure water. Under these conditions, the PAN can be kept molten for a reasonable time so as to allow its thermoplastic extrusion forming. Likewise, Kraft Lignin, because it has chains with phenolic groups that are polar, can be blended with the same substances that cause the plasticization of PAN. The inventor has found that it is possible to incorporate up to 30% Kraft Lignin with several copolymers of PAN, forming homogeneous blends with satisfactory spinning rheologies.

Glycerin and its derivatives after melting and cooling of the PAN/lignin blend are incorporated into the filaments. The entire plasticization and melting process takes place directly in the extruder, allowing the molten material to be transported and pumped by use of gear pumps to a spinneret containing tens or hundreds of holes in the order of 100 to 500 µm in diameter, forming the multifilaments which are stretched. The great advantage of the use of glycerin and its derivatives in this invention as plasticizers for obtaining the blend is that they are completely water soluble and, therefore, easily removed from the fibers in a step called in this patent as "DEPLASTICIZATION", being performed after spinning, using hot water between 80 °C and 95 °C. This step is quite similar to washing the fibers for removal of the residual solvents in the wet spinning process. After deplasticization, the fibers are dried, stretched in rolls with a temperature of 150 °C to 170 °C, lubricated and coiled.

The amounts of plasticizers and combinations thereof used in this invention are no more than 35% and the polymers used may contain up to 30% of comonomers, mainly, vinyl acetate (VA), methyl acrylate (MA), methyl methacrylate (MMA), itaconic acid (IA), acrylamide, acrylic acid (AA), vinylidene chloride (VDC), styrene (S) and vinyltoluene (VT). The precursor fibers thus obtained, being deplasticized, can be stabilized and oxidized at temperatures between 180 °C and 280 °C and carbonized between 1000 °C and 1500 °C. The plasticizers that leave the fiber and remain in the bath have low toxicity and high rate of biodegradation because they are constituted basically of glycerin mixed with its derivatives, can be discharged in a biological treatment plant.

Since glycerin is an abundant raw material on the market because it is a residue of 10% of the amount of vegetable oils used in biodiesel production, its current price in Brazil in 2014 was US$ 200/ton with a production estimated at 300,000 ton/year and consumption in the order of 40,000 ton/year, with a surplus of 260,000 ton/year in the country. The world production of glycerin is increasing, being estimated in 2015 as > 2 million tons. These data show that due to the low price and the large supply, the cost of energy required to recover the glycerin from the deplasticization bath is not economically feasible and, therefore, the best alternative is its disposal as an auxiliary nutrient in a biological treatment plant of sanitary or domestic sewage, since it is completely metabolized by microorganisms that use it as an energy source. In laboratory tests with glycerine rich baths with chemical oxygen demand (COD) of 50000 mg/L and 10x dilution factor with sanitary sewage with COD concentration of 20000 mg/L, it was demonstrated that in 12 hours of treatment, the glycerin content was reduced by 93% and by 24 hours by 96%. Other glycerin derivatives in the form of halohydrins when present and used in low concentrations, such as 1-chloro-2,3-propanediol, are easily hydrolyzed to pH 9 to produce glycerin and release chloride ion. Likewise, glycerol carbonate and the fatty monoesters of glycerin undergo hydrolysis by releasing the glycerin. When using phosphoglyceric acids as additives, the phosphoric acid produced in the hydrolysis is also an important nutrient. Another alternative to discharging the glycerin-containing baths is their use as the raw material for the synthesis of several useful substances, among which can be mentioned the gamma-polyglutamic acid (γ-PGA) biopolymer formed by the fermentation with "Bacillus natto", the same which produces the typical Japanese fermented soy food known as Natto. Several patents describe the synthesis of γ-PGA in media containing mainly glycerin at concentrations up to 80 g/L, including Patent US 6989251 by Lee et al. of 2006. γ-PGA, like glycerin, is non-toxic and in aqueous solution is highly viscous, having the ability to flocculate most of the heavy metals present in water. For this reason its use in water treatment to replace polyacrylates, polyacrylamides and aluminum salts, is increasing.

The characterization of the present application for patent of invention is hereby made by means of representative figures of the "COMPOSITION OF POLYACRYLONITRILE/LIGNIN BLEND AND ITS USE IN MELTING SPINNING OF CARBON FIBER PRECURSOR", in such a way, that the method can be fully reproduced by suitable technique.

From the elaborated figures, the descriptive part of the specification is based, through a detailed and consecutive numbering, which clarifies aspects that may be implied by the representation adopted, in order to clearly determine the protection sought.

These figures are merely illustrative, and may present variations.

### Brief Description of the Drawings of the Invention

Next, for a better understanding and comprehension of how the "COMPOSITION OF POLYACRYLONITRILE/LIGNIN BLEND AND ITS USE IN MELTING SPINNING OF CARBON FIBER PRECURSOR" is used herein, the accompanying illustrative figures are set forth.
FIG. 1 - Flowchart of the PAN/lignin blend process of manufacturing produced in melting spinning in extruder, according to this patent application.
FIG. 2 - Cross section by 3D X-ray microtomography of fibers of the 6% PAN-co-PVA with 25% of Kraft Lignin blend, being possible to observe the homogeneity of the lignin distribution in the polymer matrix.
FIG. 3 - DSC from a sample of a 6% PAN-co-PVA copolymer with 25% Kraft Lignin plasticized with 18% glycerin, 5% glycerol carbonate.
FIG. 4 - Infrared Spectroscopy (FTIR) with spectral comparison of samples of Kraft Lignin (superior), PAN-co-PS (10%) (medium), and 10% PAN-co-PS fiber with 20% Kraft Lignin blend and plasticized with 15% glycerin and 10% glycerol carbonate.
FIG. 5 - Infrared Spectroscopy (FTIR) with spectral comparison of samples of 10% PAN-co-PS fiber with 20% Kraft Lignin blend and plasticized with 15% glycerin and 10% glycerol carbonate before and after wash with water at 93 °C.

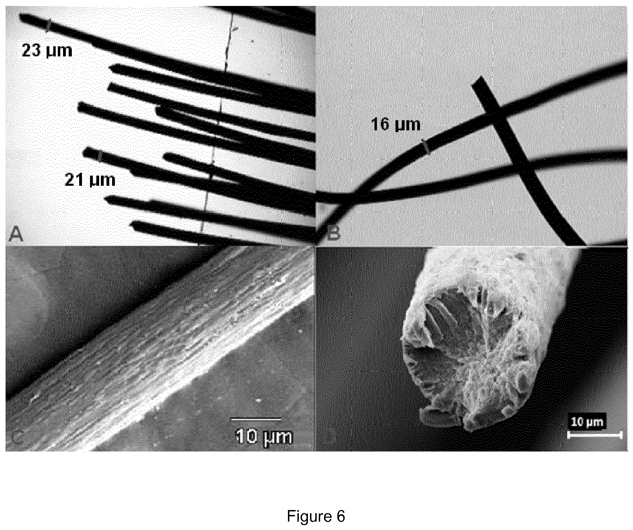

FIG. 6 - A and B top, longitudinal sections of 10% PAN-co-PVA blend precursor fiber with 20% Kraft Lignin. C and D bottom, longitudinal and transverse sections of carbon fiber obtained by the carbonization at 1000 °C of 10% PAN-co-PVA precursor with 20% Kraft Lignin blend stabilized at 185 °C for 60 min. and oxidized at 280 °C for 30 min (SEM).

### Detailed description of the invention

The present invention describes the process for the production of thermoplastic polyacrylonitrile fiber for the manufacture of carbon fiber, comprising the following steps: (I) preparing a blend of copolymer of PAN, lignin, glycerin-derived plasticizers, stabilizers and additives in the form of powder or pellets; (II) transferring to an extruder; (III) subjecting step (I) to an extrusion process; (IV) obtaining the fibers (V) performing the deplasticizing of the fibers in hot baths; (VI) drying the fibers; (VII) performing the hot drawing of the fibers; (VIII) applying lubricating oil; (IX) obtaining coils of fibers.

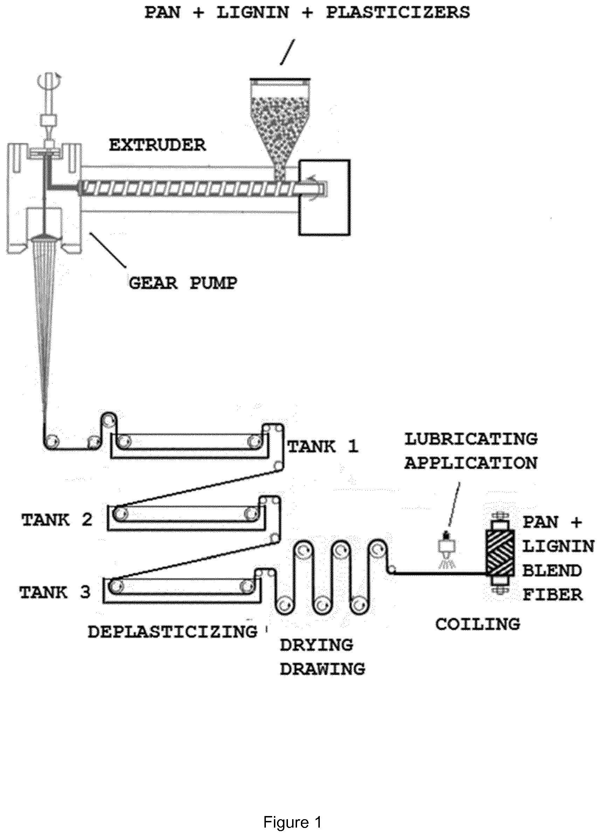

According to Figure 1, which shows the flowchart of the melting spinning process of the PAN/lignin blend of the present invention, the copolymer mixed with the plasticizers in powder form is fed into the hopper of the extruder. The extruder operates in a temperature range of 150 °C to 250 °C and melts the PAN/lignin blend, homogenization and transport to a gear pump which has the function of producing a high pressure of pumping the viscous fluid by the spinnerette. In the present invention circular spinnerette of 50 to 200 holes having diameters of 200 to 500 µm have been used. Immediately after the exit from the spinnerette, the already cooled filaments are taken to several hot baths containing solvents capable of dissolving the plasticizers used and that do not attack the fibers. In the case of the use of glycerin and glycerol carbonate as plasticizers, water, ethanol, methanol, propanol, isopropanol and their aqueous solutions may be used.

Using water as the deplasticizing solvent, the working temperatures are between 70 °C and 93 °C, and are carried out in 3 stages to minimize the entrainment of solubilised plasticizers from one tank to another. Tank 1 works at a temperature of 70 °C with a bath renewal rate of 15%/hour. The temperature of tank 2 is 80 °C and renewal rate of 5%/hour. For the complete removal of plasticizers from the fibers the maximum possible temperature of the water bath is used, which may be 90 °C to 95 °C in tank 3, depending on the local atmospheric pressure. In this third tank the recovery rate of the bath by evaporation and renewal is 5%/hour.

Using the 25% to 50% ethanol solution as the deplasticizing liquid the temperatures should be reduced by 10 °C and the temperature in the third bath should not exceed 80 °C. Methanol can also be used, plus extra care should be used, since its vapors are very toxic.

Each tank of the deplasticizing bath of this invention was 15 cm high, 20 cm wide and 150 cm long, with a working capacity of 40 L. The heating was carried out with electrical resistance of 6000 W, allowing temperature adjustment with variation of +/- 3 °C. The bath renovation was performed using Masterflex peristaltic pumps.

Soon after leaving the bath the fibers are fed to a quintet of heated rollers between 140 °C to 160 °C and a typical speed of 50 m/min for drying and then to another quintet of heated rollers to the same temperature with a typical speed of 200 m/min, where the drawing is carried out. In the already stretched fibers lubricant and antistatic spray (lubrication) is applied that is important for the production of coils with more uniform cables and with little breakage of filaments.

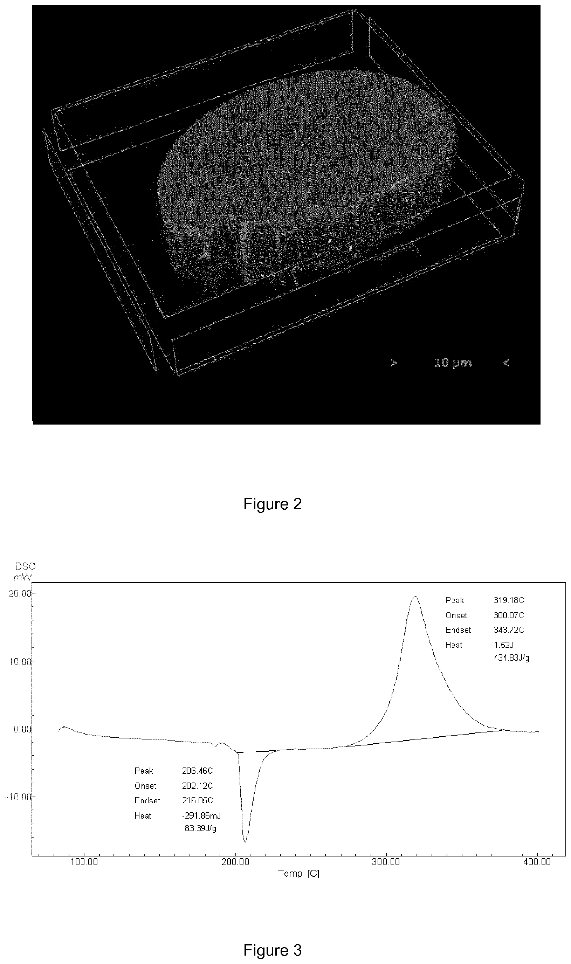

The fibers produced in accordance with this invention have a moisture content of < 1% and a lubrication of 0.1% to 0.5%. The filaments have homogeneous distribution of the lignin in the polymer matrix, they do not present voids or holes and the diameters can vary according to the drawing rate of 10 to 50 microns, as can be seen in Figure 2.

In the described process, the inventor solved the problem of PAN spinning by melting spinning process, performing its plasticization with the use of glycerin and its derivatives. According to Figure 3, it is possible to clearly see by differential scanning calorimetry (DSC) analysis of PAN blends copolymerized with 6% polyvinyl acetate (PVA) with 25% kraft lignin and plasticized with 18% glycerol and 5% glycerol carbonate, the endothermic melting peak at 206 °C, just before the exothermic peak related to polymer chain cyclization at 319 °C. This means that the presence of lignin did not prevent the crosslinking of PAN, which is crucial for the thermal stabilization of the fibers.

For the plasticized PAN, its melting zone is at a temperature of approximately 100 °C below the chain's exothermic cyclization temperature, which allows the use of extruders for the production of fiber from the blends. The plasticization of PAN with high dipolar momentum substances such as water and glycerine derivatives causes the nitrile nitrogen dipole to be preferentially attracted by the hydrogen dipoles of the OH groups of these substances, retarding the formation of crosslinks with neighboring chains, allowing its melting.

Even with the heating of the PAN coated with glycerin, glycerol carbonate and mixtures thereof, its cyclization begins between 5 and 10 minutes after melting, observed by the color change of the molten polymer, from light yellow and fluid to dark brown and viscous. This residence time in the molten form is too short for its extruder processing. It has been found that if some halogenated or phosphorous additives were added in small concentrations together with the PAN plasticizers, the polymer may remain molten for up to 1 hour, sufficient time to allow its continuous processing. These additives are referred to herein as cyclization stabilizers and may be: high boiling inorganic acids such as phosphoric acid in the form of their esters with glycerin, such as phosphoglyceric acids, more commonly 2-phosphoglyceric acid and 3- phosphoglyceric acid; halohydrins derived from glycerin, such as 1-chloro-2,3-propanediol, 1,3-dichloro-2-propanol, 1-bromo-2,3-propanediol, 1,3-dibromo-2-propanol; and the chlorinated polymers polyvinyl chloride (PVC) and polyvinylidene chloride (PVDC).

Other additives in this invention such as glycerin-derived fatty acid mono- and diesters, more specifically glyceryl monostearate, glyceryl distearate, glyceryl monooleate, glyceryl dioleate, glyceryl monolaurate, glyceryl monopalmitate, glyceryl dipalmitate, glyceryl monomyristate and mixtures thereof are referred to as lubricants and the substances ethylene carbonate, propylene carbonate, ethyleneglycol, diethyleneglycol, triethyleneglycol and mixtures thereof are referred to as viscosity reducers.

The proportions used of plasticizers and additives in the present invention are no more than 35% and cyclization stabilizers no more than 5%.

At the same time, by selecting substances that are water soluble, the inventor solved the problem of the elimination of plasticizers from the fibers, which are undesired in the thermal stabilization step, by introducing a DEPLASTICIZING bath. The use of non-water soluble plasticizers would result in the use of other types of organic solvents to remove them from the fibers which would be a major economic and environmental disadvantage for the melting spinning process proposed in this invention. Thus, the fibers, when exiting the DEPLASTICIZING bath, are similar to those produced by wet spinning processes and can be stabilized, oxidized and carbonized in traditional carbon fiber furnaces.

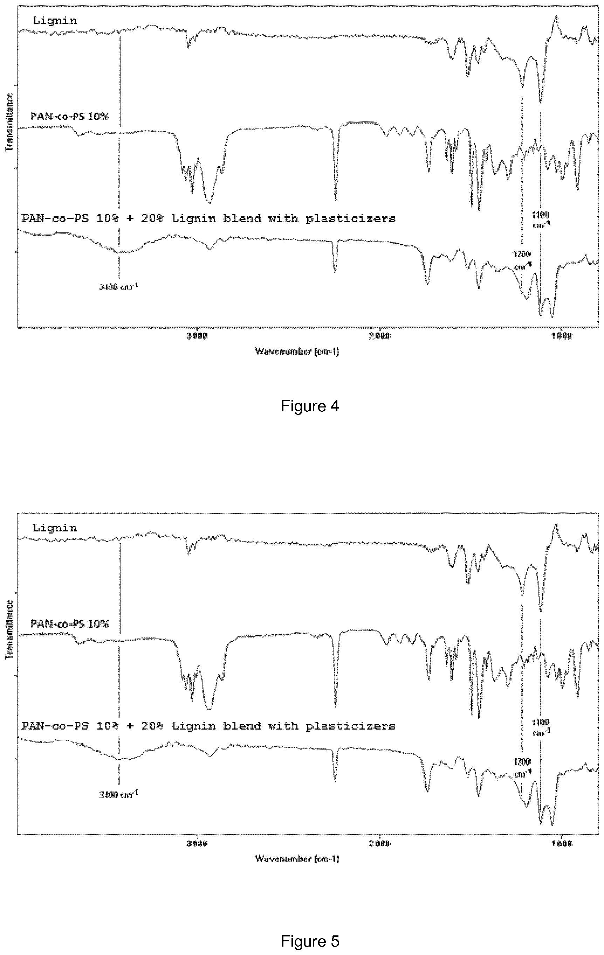

Figure 4 shows by Infrared Spectroscopy (FTIR) the spectral comparison of samples of Kraft Lignin (superior), PAN-co-PS (10%) (medium), and PAN-co-PS 10% with 20% Kraft Lignin blend fiber and plasticized with 15% glycerin and 10% glycerol carbonate. The band of 3400 cm⁻¹, which corresponds to the vibrational mode of stretch of hydrogen of group OH, is only observed in the blend due to the presence of glycerin added in the plasticization. The 2240 cm⁻¹ band is attributed to the nitrile group present in the PAN and the blend. The bands between 1200 and 1100 cm⁻¹ are attributed to the guaiacil and syringyl monomers found in Kraft Lignin, which can also be observed in the blend fibers.

Figure 5 shows by Infrared Spectroscopy (FTIR) the spectral comparison of samples of 10% PAN-co-PS with 20% Kraft Lignin blend fiber and plasticized with 15% glycerin and 10% glycerol carbonate before and after washing with water at 93 °C in the DEPLASTICIZING bath. The efficiency of the deplasticization process is evidenced by the absence of the 3400 cm⁻¹ band in the washed blend fiber, referring to the OH group present in glycerol and glycerol carbonate, used as plasticizers. Therefore, the fibers after washing are no longer thermoplastic. The fibers from the DEPLASTICIZING bath are similar to those produced by wet process because they consist essentially of copolymers of PAN and lignin and, therefore, the stages of stabilization, oxidation and carbonization are also similar to those employed for traditional precursor fibers.

The fibers of the deplasticized PAN/Lignin blend when maintained isothermally between 180 to 190 °C, are stabilized in time intervals equivalent to the fibers produced by the wet process, but the coloring gradient easily observed during the process with the PAN fibers, which are initially white, turning to yellow, gold, brown and black at the end of the process, cannot be visualized with the fibers of the blend, since the lignin present gives them a dark initial coloration.

After thermal stabilization of these fibers, the oxidation and carbonization processes are performed as for any PAN precursor, producing carbon fibers with C content > 90%, toughness > 500 MPa and excellent mechanical properties for various applications.

The copolymers of the present invention have more than 70% units derived from acrylonitrile, copolymerized with one or more comonomers, and represented by acrylic units, such as:

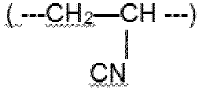

The Kraft Lignin used in this invention was purchased commercially from Sigma-Aldrich of Brazil, which the seller says was produced by the Lignoboost process. The molecular weight Mw was approximately 10 kDa, the pH of the 3% solution was 10.5, the sulfur content was 3.3% and the carbon content was 50.1%. Gravimetric analysis of the ash content at 750 °C resulted in 0.35%.

The glycerin mentioned in this invention was purified from biodiesel glycerin by chemical treatment and removal of water and methanol by vacuum heating without distillation. Due to the low content of glycerin, presence of unconverted fatty acids, lecithins, sodium hydroxide, sodium salts, and residual methanol, it is not possible to use them as a plasticizer of PAN without its purification. For this, residual glycerin sample supplied by Bioverde located in the city of Taubaté (Brazil) with 85% content was submitted to the following process, based on the literature and described in Rev. Virtual Quim., 2014, 6 (6), p. 1564 to 1582: to 5.0 kg of crude glycerine heated to 70 °C was added, with stirring, 100 ml of 85% phosphoric acid. Under these conditions and after decantation, the fatty acids and lecithins are separated from the glycerin. This glycerin was filtered through activated charcoal bed for color removal and then passed in an ion exchange resin cartridge containing Amberlite IR 120 cation resin for removal of sodium salts. This glycerin was heated at 90 °C under vacuum for 1 hour to remove residual water and methanol. The final product had 97% purity content, 0.047% sodium ashes < 20 mg/kg (ppm) and can be used as a plasticizer of the PAN/Lignin blend in this invention.

The other raw materials used herein, such as: glycerol carbonate was purchased from Huntsman and marketed under the trademark Jeffsol Glycerol Carbonate; PVC was purchased from Braskem and marketed under the trademark Norvic; fatty esters of glycerin were purchased from Polytechno Chemical Industries; ethylene glycol and diethyleneglycol were purchased from Oxiteno; the acrylonitrile, vinyl acetate, itaconic acid and acrylamide monomers were supplied by Radifibras; all other raw materials were purchased from Sigma-Aldrich do Brasil.

In order to further demonstrate the preferred embodiments, which are representative of, but not limited to, the experiments performed, the following application examples of the present invention will be presented; the acrylic copolymers described in that patent were produced by suspension polymerization employing acrylonitrile, comonomers, potassium persulfate (initiator, oxidizing agent), sodium bisulfite (activator, reducing agent), ammoniacal ferrous sulfate (redox catalyst) and tetrasodium EDTA (chelating agent), according to metolology described in the literature, "Acrylic Fiber Technology and Applications," James C. Mason, 1995, p. 37 to 67.

**Example 01:** Approximately 1500 g (54.7%) PAN copolymerized with 6% vinyl acetate with Mw 138,000, moisture content of 0.7% and particle size < 20 µm, was blended into a blender at 75 °C (18.2%) of Kraft Lignin, 525.0 g (19.2%) glycerol, 40.0 g (1.5%) 3-chloro-1,2-propanediol, 110.0 g (3.4%) of glyceryl monostearate, 50.0 g (1.8%) of 85% phosphoric acid and 16.0 g (0.6%) of ethylene glycol. After 20 minutes of homogenization the mixture was cooled for 1 hour. The obtained mass was sieved and the passing fraction less than 100 µm was separated and fed into a 20 mm thread extruder at a speed of 60 rpm with 5 heating zones, the first area being 210 °C, second, third and fourth zones being 205 °C and the fifth zone comprising the gear pump and the spinnerette at 210 °C. In this example the spinnerette had 90 holes with a diameter of 250 µm. The fiber cable was deplasticized with hot water in three baths with respective temperatures of 70 °C, 80 °C and 93 °C, dried at a rate of 40 m/min at 130 °C in a quintet of rolls and drawn at 150 °C with a speed of 120 m/min in another quintet, with an lubricating bath (Stantex - Pulcra Chemicals) and then coiled. The fibers obtained in this example were black, diameter 25 µm, resistance of 11 cN/tex, moisture of 0.9% and lubrication content of 0.3%.

A fiber strand of 90 filaments and 25% lignin content in the blend was stabilized at 180 °C for 60 minutes and heated at a rate of 10 °C/min to 280 °C. The temperature was maintained for 20 minutes. The black oxidized fiber was carbonized at 1000 °C under nitrogen for 12 minutes. The yield was 58.3% carbon, with a diameter of 20 µm, toughness of 650 MPa and modulus of 75 GPa.

**Example 02:** approximately 1500 g (51.3%) PAN copolymerized with 6.0% vinyl acetate with Mw 138,000, moisture content of 0.7% and particle size < 20 µm, was blended into a blender at 90 °C under stirring with 500 g (17.1%) Kraft Lignin, 586 g (20.0%) glycerin, 147 g (5.0%) glycerol carbonate, 29.0 g (1.0 %) of 3-chloro-1,2-propanediol, 70.0 g (2.4%) of glyceryl monooleate, 65.0 g (2.2%) of 85% phosphoric acid and 28.0 g (1,0%) of ethyleneglycol. After 20 minutes of homogenization the mixture was cooled for 1 hour. The obtained mass was sieved and the passing fraction less than 100 µm was separated and fed into a 20 mm thread extruder at a speed of 75 rpm with 5 heating zones, the first area being 205 °C, second, third and fourth zone being 210 °C and the fifth zone comprising the gear pump and spinnerette 205 °C. In this example the spinnerette had 50 holes with a diameter of 500 µm. The fiber cable was deplasticized with hot water in three baths at respective temperatures of 70 °C, 80 °C and 93 °C, dried at a rate of 50 m/min at 130 °C in a quintet of rolls and drawn at 150 °C with a speed of 120 m/min in another quintet, with an lubrication bath (Stantex - Pulcra Chemicals) and then coiled. The fibers obtained in this example were black, diameter 28 µm, resistance 9 cN/tex, moisture 0.6% and lubrication content of 0.4%. The lignin content in this blend was 25%.

The 50-strand fiber strand was stabilized at 180 °C for 60 minutes and heated at a rate of 10 °C/min to 275 °C. The temperature was maintained for 20 minutes. The black oxidized fiber was carbonized at 1000 °C under nitrogen for 12 minutes. The yield was 58.5% carbon, with a diameter of 19 µm, toughness of 690 MPa and a modulus of 82 GPa.

**Example 03:** approximately 1600 g (55.7%) PAN copolymerized with 10% styrene with MW 158,000, moisture content of 0.50% and particle size < 20 µm, was blended in a blender at 90 °C under stirring with 400g (13.9%) of Kraft Lignin, 500 g (17.4%) of glycerin, 150 g (5.2%) of glycerol carbonate, 71.0 g (2.5%) bromo-1,2-propanediol, 35.0 g (1.2%) of PVC NORVIC SP 700 HF (Braskem), 80.0 g (2.8%) of 85% phosphoric acid and 35.0 g (1,2%) of diethyleneglycol.

After 20 minutes of homogenization the mixture was cooled for 1 hour. The obtained mass was sieved and the passing fraction less than 100 µm was separated and fed in a 20 mm thread extruder and extruded at a speed of 60 rpm with 4 heating zones, the first zone being 195 °C, the second and third being 200 °C and the fourth zone being 200 °C comprising a 3 mm diameter bore head. The extrudate was drawn up to 1.5 mm in diameter and cut into 2 mm long pellets.

These pellets were fed into a 20 mm thread extruder and extruded at a speed of 80 rpm with 5 heating zones, the first zone being 205 °C, the second, third, and fourth zone being 200 °C and the fifth zone comprising the gear pump and spinnerette at 205 °C. In this example the spinnertte had 120 holes with a diameter of 250 µm. The fiber strand was deplasticized with hot water in three baths at respective temperatures of 70 °C, 80 °C and 93 °C, dried at a rate of 40 m/min at 140 °C in a quintet of rolls and drawn at 150 °C with a velocity of 150 m/min in another quintet, with an lubricating bath (Stantex - Pulcra Chemicals) and then coiled. The fibers obtained in this example were dark in color, diameter 22 µm, resistance of 14 cN/tex, moisture of 0.6% and lubrication content of 0.26%. The lignin content in this blend was 20%.

The fiber strand of 120 filaments was stabilized at 190 °C for 60 minutes and heated at a rate of 10 °C/min to 275 °C. The temperature was maintained for 10 minutes. The black oxidized fiber was carbonized at 1000 °C under nitrogen for 12 minutes. The yield was 57.5% carbon, with a diameter of 22 µm, toughness of 780 MPa and modulus of 95 GPa.

**Example 04:** approximately 1600 g (57.6%) copolymerized PAN with 2.4% acrylamide and 2.5% methyl acrylate with Mw 163,000, moisture content of 0.70% and particle size < 20 µm was blended in a blender at 90 °C under stirring with 400 g (14.4%) Kraft Lignin, 300 g (10.8%) glycerin, 300 g (10.8%) glycerol carbonate, 40,0 g (1.4%) of 60% mixture of glyceryl monostearate and 40% of glyceryl distearate, 32.0 g (1.2%) of PVC NORVIC SP 700 HF, 52.0 g (1.9%) of mixture containing 2-phosphoglyceric acids and 3-phosphoglyceric acid with 25% phosphoric acid and 55.0 g (2.0%) of propylene carbonate.

After 20 minutes of homogenization, the mixture was cooled for 1 hour. The obtained mass was sieved and the passing fraction less than 100 µm was separated and fed in a 20 mm thread extruder and extruded at a speed of 50 rpm with 4 heating zones, the first zone being 205 °C, the second and third being 200 °C and the fourth zone being 205 °C comprising a 3 mm diameter bore head. The extrudate was drawn to 2.0 mm in diameter and cut into 2 mm long pellets.

These pellets were fed into a 20 mm thread extruder and extruded at a speed of 60 rpm, with 5 heating zones, the first zone being 205 °C, the second, third and fourth zones being 200 °C and fifth zone comprising the gear pump and the spinnerette with 210 °C. In this example the spinnerette had 50 holes with a diameter of 500 µm. The fiber cable was deplasticized with hot water in three baths with respective temperatures of 70 °C, 80 °C and 93 °C, dried at a rate of 65 m/min at 140 °C in a quintet of rolls and drawn at 150 °C °C with a speed of 130 m/min in another quintet, with an lubricating bath (Stantex - Pulcra Chemicals) and then coiled. The fibers obtained in this example were black, diameter 35 µm, strength 9 cN/tex, moisture 0.4% and lubricating content 0.29%. The lignin content in this blend was 20%.

The 50-filament fiber cable was stabilized at 180 °C for 60 minutes and heated at a rate of 10 °C/min to 275 °C. The temperature was maintained for 20 minutes. The black oxidized fiber was carbonized at 1000 °C under nitrogen for 12 minutes. The yield was 58.7% carbon, with a diameter of 24 µm, toughness of 678 MPa and modulus of 67 GPa.

**Example 05:** approximately 1440 g (47.3%) PAN copolymerized with 4.6% methyl acrylate and 6.0% styrene with Mw 121,000, moisture content of 0.50% and particle size < 20 µm was blended in a blender at 90 °C under stirring with 560 g (18.4%) Kraft Lignin, 550 g (18.1%) glycerin, 280 g (9.2%) glycerol carbonate, 22,0 g (0.7%) of 1,3-dichloro-2-propanol, 73.0 g (2.4%) of 60% mixture of glyceryl monostearate and 40% glyceryl distearate, 60,0 g (2,0%) of 85% phosphoric acid and 60.0 g (2.0%) of propylene carbonate.

After 30 minutes of homogenization the mixture was cooled for 1 hour. The obtained mass was sieved and the passing fraction smaller than 100 µm was separated and fed in a 20 mm thread extruder and extruded at a speed of 60 rpm with 4 heating zones, the first zone being 195 °C, the second zone and third being 200 °C and the fourth zone being 198 °C comprising a 3 mm diameter bore head. The extrudate was drawn to 2.0 mm in diameter and cut into 2 mm long pellets.

These pellets were fed into a 20 mm thread extruder and extruded at a speed of 60 rpm with 5 heating zones, the first zone being 195 °C, the second, third and fourth zone being 198 °C and fifth zone comprising the gear pump and the spinnerette with 198 °C. In this example the spinnerette had 150 holes with a diameter of 250 µm. The fiber cable was deplasticized with hot water in three baths with respective temperatures of 70 °C, 80 °C and 93 °C, dried at a rate of 55 m/min at 145 °C in a quintet of rolls and drawn at 150 °C with a velocity of 160 m/min in another quintet, with an lubricating bath (Stantex - Pulcra Chemicals) and then coiled. The fibers obtained in this example were black with a diameter of 23 µm, resistance of 8 cN/tex, moisture of 0.5% and lubricating content of 0.22%. The lignin content in this blend was 28%.

The fiber strand with 150 filaments was stabilized at 180 °C for 60 minutes and heated at a rate of 10 °C/min to 275 °C. The temperature was maintained for 20 minutes. The black oxidized fiber was carbonized at 1000 °C under nitrogen for 12 minutes. The yield was 57.8% carbon, with a diameter of 17 µm, toughness of 635 GPa and a modulus of 82 GPa.

For the advantages it offers, and also, because it has truly innovative characteristics that meet all the requirements of novelty and originality in the genre, the present "COMPOSITION OF POLYACRYLONITRILE/LIGNIN BLEND AND ITS USE IN MELTING SPINNING OF CARBON FIBER PRECURSOR", meets the conditions necessary and sufficient to deserve the patent of invention.

## Claims

1. Polyacrylonitrile/lignin blend composition leading to the production of carbon fiber precursor fiber **characterized by** containing:
a) minimum 45% of copolymer containing 70% or more of acrylonitrile monomer
b) not more than 20% lignin
c) not more than 35% combinations of other substances allowing melting and spinning of the blend to be classified into the following groups and having the following characteristics:
I) plasticizers having a boiling point greater than 170 °C, soluble in water and alcohols
II) cyclization stabilizers having a boiling point greater than 170 °C, soluble in water and alcohols, or derivatives of halogenated polymers
III) lubricants having a boiling point greater than 170 °C, soluble in water and alcohols
IV) viscosity reducers having a boiling point greater than 170 °C, soluble in water and alcohols

2. Polyacrylonitrile/lignin blend composition leading to the production of carbon fiber precursor fiber, according to claim 1, **characterized by** containing polyacrylonitrile copolymer having not more than 30% of comonomers, among which the vinyl acetate, methyl acrylate, methyl methacrylate, itaconic acid, acrylamide, acrylic acid, vinylidene chloride, styrene and vinyltoluene.

3. Polyacrylonitrile/lignin blend composition leading to the production of carbon fiber precursor fiber, according to claim 1, **characterized by** containing plasticizers, substances having high boiling point, soluble in water and alcohols, such as glycerin, glycerol carbonate and combinations thereof.

4. Polyacrylonitrile/lignin blend composition leading to the production of carbon fiber precursor fiber, according to claim 1, **characterized** containing as cyclization stabilizers, substances having high boiling point, soluble in water and alcohols, glycerine derivatives, such as 3-chloro-1,2-propanediol (a-chlorohydrin), 3-fluoro-1,2-propanediol (a-fluorohydrin), 3-bromo-1,2-propanediol (a-bromohydrin), 1,3-dichloro-2-propanol, 1,3-difluoro-2-propanol, 1,3-dibromo-2-propanol and combinations thereof.

5. Polyacrylonitrile/lignin blend composition leading to the production of carbon fiber precursor fiber, according to claim 1, **characterized by** containing as cyclization stabilizers, substances having high boiling point, soluble in water and alcohols, such as inorganic acids, sulfuric acid and phosphoric acids, such as metaphosphoric acid, orthophosphoric acid, pyrophosphoric acid, polyphosphoric acid, phosphoglyceric acids and combinations thereof.

6. Polyacrylonitrile/lignin blend composition leading to the production of carbon fiber precursor fiber, according to claim 1, **characterized by** containing as cyclization stabilizers, halogenated polymers and copolymers, such as polyvinyl chloride (PVC), polyvinyl bromide, polyvinylidene chloride (PVDC) and polyvinylidene fluoride (PVDF).

7. Polyacrylonitrile/lignin blend composition leading to the production of carbon fiber precursor fiber, according to any of claims 4 to 6, **characterized by** containing not more than 5% cyclization stabilizers.

8. Polyacrylonitrile/lignin blend composition leading to the production of carbon fiber precursor fiber, according to claim 1, **characterized by** containing as extrusion lubricants, substances having high boiling point, soluble in water and alcohols, such as fatty acid mono and diesters derived from glycerin, mainly glyceryl monostearate, glyceryl distearate, glyceryl monooleate, glyceryl dioleate, glyceryl monolaurate, glyceryl monopalmitate, glyceryl dipalmitate, glyceryl monomyristate, and combinations thereof.

9. Polyacrylonitrile/lignin blend composition leading to the production of carbon fiber precursor fiber, according to claim 1, **characterized by** containing as viscosity reducers, substances having high boiling point, soluble in water and alcohols, such as ethylene carbonate, propylene carbonate, ethyleneglycol, diethyleneglycol, triethyleneglycol and combinations thereof.

10. Polyacrylonitrile/lignin blend composition leading to the production of carbon fiber precursor fiber, according to any of claims 1 to 9, **characterized by** using in the fiber deplasticizing process, the water and C1 to C3 alcohols as methanol, ethanol, propanol, isopropanol or mixtures thereof as solvents.

11. Polyacrylonitrile/lignin blend composition leading to the production of carbon fiber precursor fiber, according to claim 10, **characterized by** having a deplasticizing step which can be carried out continuously with the spinning process or discontinuously directly on the obtained coils.

12. Polyacrylonitrile/lignin blend composition leading to the production of carbon fiber precursor fiber, according to any of claims 1 to 11, **characterized by** producing meltblown polyacrylonitrile fibers which can be thermally stabilized and carbonized in conventional equipments, in the same way as the fibers produced by the wet spinning process.

13. Polyacrylonitrile/lignin blend composition leading to the production of carbon fiber precursor fiber, according to any of claims 1 to 11, **characterized by** producing meltblown polyacrylonitrile fibers which can have circular or several monolithic crossection, with diameters of 5 to 500 µm and resistance > 5 cN/tex.
